# EUROPEAN PATENT APPLICATION

(11) **EP 1 988 459 A1**
(43) Date of publication of application: **05.11.2008**
(21) Application number: 08001927.6
(22) Date of filing: 01.02.2008
(51) Int. Cl.: G06F 9/46

(54) **Electronic device, computer readable recording medium and electronic device control method**

(30) Priority: 05.02.2007 JP 2007025205
(71) Applicant: KYOCERA MITA CORPORATION, Osaka-shi, Osaka 540-8585 (JP)
(72) Inventor: Shigenaka, Kanemitsu, c/o Kyocera Mita Corporation, Chuo-ku Osaka 540-8585 (JP); Takashi, Araki, c/o Kyocera Mita Corporation, Chuo-ku Osaka 540-8585 (JP); Atsushi, Iwatsubo, c/o Kyocera Mita Corporation, Chuo-ku Osaka 540-8585 (JP)
(74) Representative: Schäfer, Matthias W.

(57) **Abstract**

An application operates in an application execution environment by a framework. A browser communicates with the application through a route for directly communicating with a controller element section in order to manage the application. The controller element section is commonly used by the application execution environment and the application.

## Description

### BACKGROUND OF THE INVENTION

### 1. Field of the Invention

This invention generally relates to the technology of framework for managing applications to be installed in electronic devices and also to the technology of controlling applications. More particularly, the present invention relates to an electronic device, a computer readable recording medium and a method of controlling an electronic device.

### 2. Description of the Related Art

Electronic devices having a plurality of functional features (e.g., copying, FAX transmission/reception and scanner) such as image forming apparatus require a plurality of programs for executing the individual features. Process of developing those programs consumes a lot of time and labor when each of the programs is developed independently. The programs for executing the copying feature, the FAX transmission/reception feature and the scanner feature independently have program parts that are common to all the features. Therefore, the development can be realized highly efficiently, the programs can be downsized and executed at high speed, and the memory resources can be saved if those parts are developed as common controller elements and commonly used in the programs.

Meanwhile, environments with a library rich of hardware control elements such as the execution environment of JVM (Java® Virtual Machine) and that of OSGI (Open Services Gateway Initiative) have become available. Especially, the efficiency of developing and implementing application programs have been raised particularly by adding libraries such as Xlet to JVM; the libraries are formed on an assumption of controlling a home-use television device.

In Jpn. Pat. Appln. Laid-Open Publication No. 2005-269619, a management mechanism is proposed for managing a plurality of application programs in an image forming apparatus. In the management mechanism, an application displays an operation screen for operating some other applications managed by a platform equipped in an image forming apparatus for managing applications (where the term "platform" is used in the above publication, the term "platform" generally means a framework).

However, a problem arises with the proposed technique because an application for controlling lifecycle of an application and exclusive usage of a display screen is produced in the same manner as one for producing other applications.

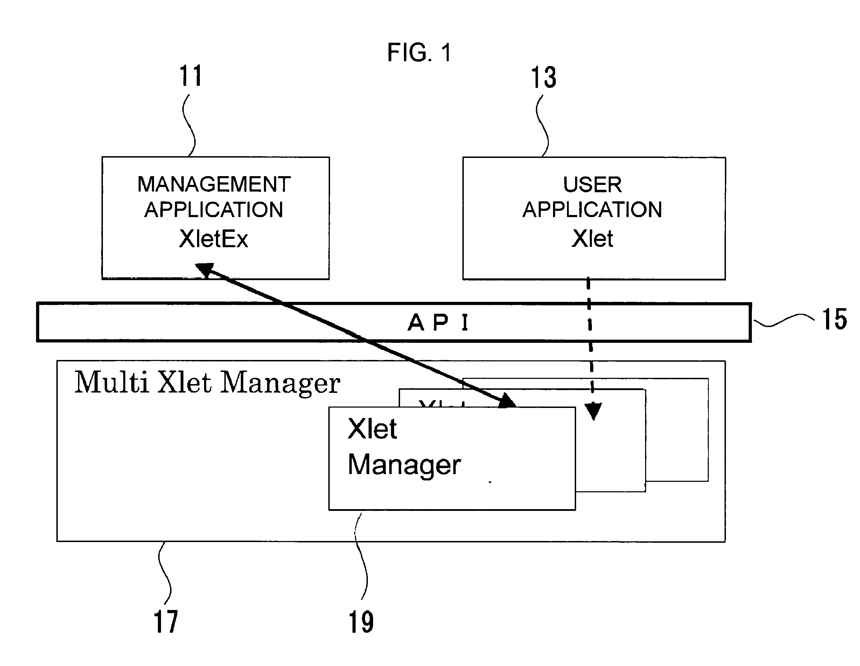

This problem will be described by way of an example where the application program is an Xlet by referring to FIG. 1. In FIG. 1, where a user application Xlet 13 collects and manages information by means of Xlet Managers 19 on a framework Multi Xlet Manager 17, a management application XletEx 11 is responsible of specific operations. Therefore, the XletEx 11 has privileges that the Xlet 13 does not have generally. For example, the XletEx 11 can access the framework. More specifically, the XletEx 11 is provided the privilege of directly accessing the framework, while the Xlet 13 is not provided. If some developers produce XletEx type applications, the applications may cause a severe damage to the framework due to the privileges. Thus, the privileges of the XletEx 11 are deemed as a sort of security hole.

### SUMMARY OF THE INVENTION

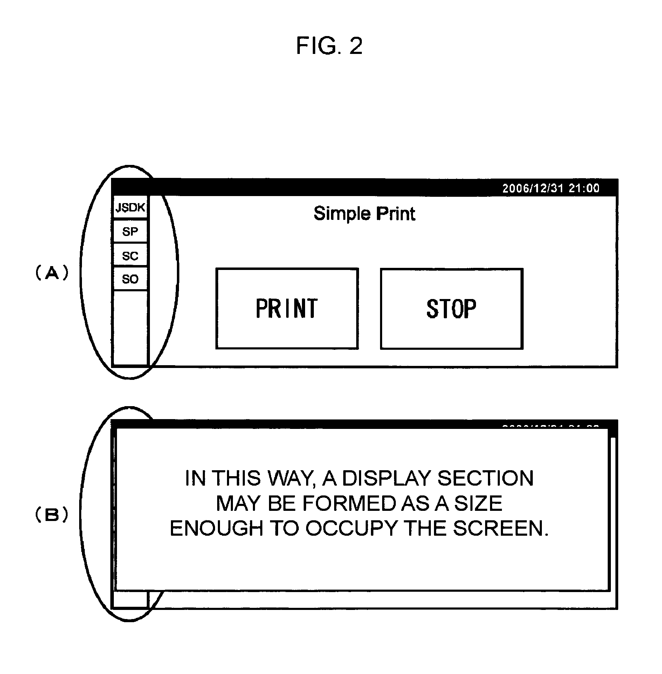

According to techniques in the above publication, a privileged management application (e.g. a task bar displaying application in the above publication) is required to switch one to one among display sections of applications (including a management application) on a display panel. Unlike other applications, this privileged application is constantly being displayed on the panel. Then, as a result, there can arise a problem that any switching operations can not be done at all if a task bar displayed on the panel is overwritten with the display section of the user applications (see FIG. 2).

Additionally, a plurality of applications (Xlet managers 19) are required to be held active for management, error notification, switching and other purposes even if the applications are not directly related current operations of the electronic apparatus
This causes to waste system resources.

In view of the above-identified circumstances, therefore the problem to be solved is that, in an electronic device having a framework for operating one or more application programs in an application execution environment and communicating between a browser program and the one or more application programs, its control program and a control method for the same, system resources such as memories and threads are consumed wastefully for features that are explicitly not required by a user because lifecycle of user applications (i.e. application programs) etc. are managed by a management application on the same level as the user applications. Additionally, since the management application is on the same level as the user applications, security holes may arise due to behavior of the user applications.

An electronic device according to an aspect of the present invention is principally characterized in that it comprises a framework that causes an application to operate in an application execution environment, and performs communication between a browser and the application; and further comprises a controller element section commonly used by the application execution environment and the application; and the browser manages the application through a route for directly communicating with the controller element section.

A control program for causing a computer to realize an application operating in an application execution environment by means of a framework and a feature of managing the application according to an aspect of the present invention is principally characterized in that it causes the computer to realize a transmission feature for establish transmission of an application management instruction on communication directly with the browser by a controller element section independent from the application execution environment, and a management feature for managing the application according to the instruction by the application execution environment. The control program is stored in a computer readable recording medium. Recording mediums that can be used for storing the control program include optical disks, magnetic disks and semiconductor memories.

A method of controlling an electronic device having a framework that causes an application to operate in an application execution environment, and performs communication between a browser and the application; is principally characterized in that the browser manages the application through a route for directly communicating with the controller element section commonly used by the application execution environment and the application.
These and other objects, features and advantages of the present invention will become more apparent upon reading of the following detailed description along with the accompanied drawings.

### BRIEF DESCRIPTION OF THE DRAWINGS

FIG. 1 is a schematic illustration of the method of managing application programs of a conventional technique;
FIG. 2 is schematic illustration of exclusive usage of a display screen arisen when the screen is changed in a conventional technique; and
FIG. 3 is a schematic functional block diagram of an example of image forming apparatus according to an aspect of the present invention.

### DETAILED DESCRIPTION OF THE PREFERRED EMBODIMENTS

In embodiments of electronic device, control program and method of controlling an electronic device according to an aspect of the present invention, a controller element section written in native code implemented in a framework communicates directly with an operation panel browser to manage one or more application programs.

### [Example 1]

In an image forming apparatus which realizes a copying feature, a FAX feature and a scanner feature, parts realized by software are referred to as applications. Generally, an image forming apparatus has an individual application means for each of the above-listed features (the copying feature, the FAX feature and the scanner feature).

A program executed by a computer in the image forming apparatus in order to realize the application means and make it function is referred to as "application program." Application programs are executed by the computer of the image forming apparatus in cooperation with hardware of the image forming apparatus in order to realize the above listed features (the copying feature, the FAX feature and the scanner feature).

### [Configuration]

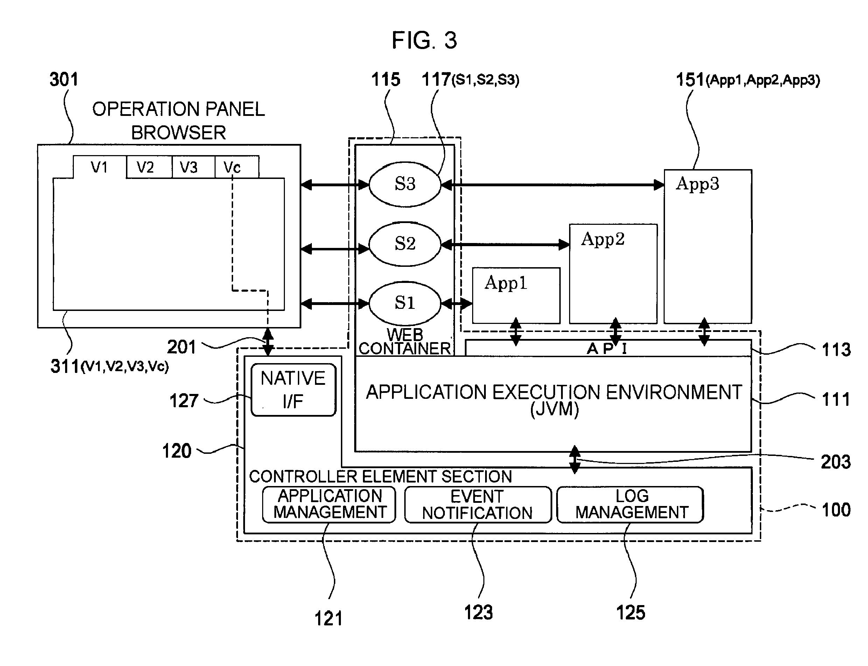

FIG. 3 is a schematic block diagram of an image forming apparatus as an example of an electronic device according to an aspect of the present invention. Note that FIG. 3 shows only the software feature section and the panel operation section that directly relate to the aspect of the present invention, and a printing section, a scanning section and other sections that do not relate to essence of the aspect of the present invention are omitted.

The image forming apparatus is equipped with the application programs 151App1, 151App2 and 151App3. The application programs are executed through API (application program interface) 113 in an application execution environment 111 (e.g., JVM (JAVA® virtual machine)).

A web container 115 is provided in the application execution environment 111, and servlets 117S1, 117S2 and 117S3 are disposed in the web container 115; the servlets have a Web server feature for communicating with a browser 301 and are responsible for communication with the application programs 151 (App1, App2, App3).

A library commonly used by the web container 115 and the application execution environment 111 is provided as a controller element section 120 (L-shaped part in FIG. 3). In the section 120, controller elements typically include an application management section 121 that is in charge of starting and ending application programs and managing memories during execution of application programs etc., an event notification section 123 for notifying occurrences of events to other sections, a log management section 125 responsible for log recording, and a native I/F (interface) section 127 responsible for communication with the operation panel browser 301.

The controller element section 120 is independent from the above-described application execution environment 111. The expression "the controller element section 120 is independent" means that the controller element section 120 can operate without the application execution environment. In other words, since the controller element section is written in native code, the controller element section is free from low-speed problems due to being written in intermediate code operated on a JVM execution environment and problems caused by operation dependent on an execution environment.

The application execution environment 111, the API (application protocol interface) 113, the web container 115 and the controller element section 120 are collectively referred to as a framework 100 (i.e. convexly shaped part enclosed by dotted lines in FIG. 3).

The operation panel browser 301 operates in the operation panel section of the image forming apparatus. The CPU (central processing unit) executing a program of the operation panel browser 301 is independent from another CPU where the framework 100 and the application programs 151 operate. Consequently, the operation panel section itself is formed as an independent unit.

The operation panel browser 301 communicates with each of the application programs 151 by using one of the servlets 117 that corresponds to one of the application programs 151 in the web container 115 (e.g., S1 for App1).

The operation panel browser 301 is realized as a multi-tab type browser program. An operation page V1 (311V1 that corresponds to App1), an operation page V2 (311V2 that corresponds to App2) and an operation page V3 (311V3 that corresponds to App3) for operating the respective application programs are displayed by the respective corresponding servlets S1, S2 and S3. The operation panel browser 301 also has a control page Vc (311Vc) for managing the application programs.

The control page 311Vc can communicate with the native I/F section 127 of the controller element section 120 to start and end executing the application programs and manage memories during executions of the application programs by the application management section 121.

### [Operation route]

While three application programs (App1, App2 and App3 which correspond to the user application in FIG. 1) are operating and their display functions are formed by means of HTML (hyper text markup language) according to the JAVA® servlet techniques. The operation pages 311V1 through 311V3 produced by the respective servlets 117S1 through 117S3 are displayed by the operation panel browser 301. The browser can display the pages in a multi-tab manner and can handle the display sections concurrently so long as the number of sessions does not reach a limit.

In this example, the browser feature is used to switch one to one among the display sections, so that another particular application is not required. The operation pages V1 through V3 are displayed as HTML pages in the browser and, therefore, a problem that an operation section of the browser is hidden due to overwriting as shown in FIG. 2 does not take place.

An application management instruction is exchanged through a route 201 between the control page 311Vc of the operation panel browser 301 and the native I/F section 127 of the controller element section 120, and then transmitted to the application execution environment 111 through the route 203 between the controller element section 120 and the application execution environment 111. Further, the application management instruction is transmitted to the application programs 151App1 through 151App3 through the API 113 of the application execution environment 111, and then management operation is performed according to the instruction.

### [Advantages on this example]

In this example of the image forming apparatus, the controller element section written in native code and the operation panel browser directly communicate with each other to manage lifecycle of the application programs including start, end and memory management. Therefore, comparing with using Xlet shown in FIG. 1, system resources such as memories and threads are not consumed wastefully for features out of the view of the user. Furthermore, erosions of memory regions and security holes do not arise due to behavior of applications.

In this example of the image forming apparatus, the controller element section (including the native I/F, the application management section and so on) which communicates with the control page Vc of the operation panel browser can operate at high speed because the controller element section is implemented using native code. Additionally, the applications can be controlled at a deeper interrupt level to raise level of application management and hence that of security.

Additionally, since the control page Vc directly communicates with the native I/F section without communicating through the web container, the protocol to be used for the communication is not restricted by the web protocol.

Still additionally, the operation panel section can be formed as an independent unit in the image forming apparatus in which an independently equipped CPU executes a browser program. Thus, the operation panel section can be developed as a general-purpose unit product in an independent development process.

As a result, coordination between the ordinary menu structure (display and operation of a panel menu on the basis of correlation of the controller and the panel) and the display of an application can be made smooth so that it becomes easy to add a new feature to the existing menu.

While the application execution environment of the above example is described above in terms of JVM or OSGI, another execution environment may alternatively be used for the purpose of the present invention.

While the browser program of the operation panel section is executed by the independent CPU in the above-described example, it may alternatively be executed by the CPU same as the CPU operating for the application execution environment or a CPU of an external terminal independent from the image forming apparatus.

While the servlets are used for communication between the operation panel browser and the application program in the above-described example, a technique of directly using a CGI (common gate interface) or a technique of using middleware may alternatively be used for the purpose of the present invention.

## Claims

1. An electronic device having a framework that causes an application to operate in an application execution environment and performs communication between a browser and the application comprising:
a controller element section commonly used by the application execution environment and the application,
wherein the browser manages the application through a route for directly communicating with the controller element section.

2. The electronic device according to claim 1, wherein
the browser and the application communicate with each other by a servlet operating in the application execution environment.

3. The electronic device according to claim 1, wherein
the controller element section functions according to a program written in native code.

4. The electronic device according to claim 1, wherein
the browser has a control page for managing the application.

5. The electronic device according to claim 1, wherein
the application execution environment is Java® Virtual Machine.

6. The electronic device according to claim 1, wherein
the application functions by means of Applet or Xlet.

7. The electronic device according to claim 1, wherein
the browser operates on any of CPUs including a CPU causing the application execution environment to operate, a CPU implemented independently in the electronic device other than the CPU causing the application execution environment to operate and a CPU implemented in an external terminal other than the electronic device.

8. A computer readable recording medium storing a control program for causing a computer to realize an application operating by a framework in an application execution environment and a management feature for managing the application through communication with a browser, further to realize:
a transmission feature for establishing transmission of an application management instruction to a controller element section by communicating directly with a browser, the controller element section is independent from an application execution environment in which an application operates by means of a framework,
wherein the management feature for managing the application according to the instruction by the controller element section.

9. An electronic device control method for controlling an electronic device having a framework that causes an application to operate in an application execution environment and performing communication between a browser and the application, wherein:
the browser manages the application through a route for directly communicating with a controller element section commonly used by the application execution environment and the application.
